Europäisches Patentamt

European Patent Office

Office européen des brevets

(19)

(11) Publication number: **0 154 427**
**B1**

(12) **EUROPEAN PATENT SPECIFICATION**

(45) Date of publication of patent specification: **11.01.89**

(21) Application number: **85300939.7**

(22) Date of filing: **13.02.85**

(51) Int. Cl.⁴: **B 60 N 1/12, B 60 R 22/00**

(54) Child's vehicle seat.

(30) Priority: **17.02.84 GB 8404282**

(43) Date of publication of application:
**11.09.85 Bulletin 85/37**

(45) Publication of the grant of the patent:
**11.01.89 Bulletin 89/02**

(84) Designated Contracting States:
**AT BE CH DE FR GB IT LI LU NL SE**

(56) References cited: -
**BE-A- 746 869**
**FR-A-2 436 696**
**GB-A-2 012 568**
**US-A-3 245 717**
**US-A-3 366 294**

(73) Proprietor: **Swift, Thomas Richard**
**23, Holybourne Avenue**
**Roehampton London SW15 (GB)**

(72) Inventor: **Swift, Thomas Richard**
**23, Holybourne Avenue**
**Roehampton London SW15 (GB)**

(74) Representative: **Senhenn, Derek Alan et al**
**50 Gerard Road Barnes**
**London SW13 9QQ (GB)**

## Description

This invention relates to a child's vehicle seat for use by small children wherever they are required to be retained in a position in a vehicle by normal adult-sized safety straps or harness on a normal passenger seat in a road vehicle, airfract, hovercraft, or other land or sea vehicle.

It is customary, or even mandatory, in many countries for road vehicles and aircraft in particular to be fitted with passenger safety belts or harness. Such belts or harness are normally constructed and sized for use by adults, so that problems of safety and comfort arise for children when they attempt to use such adult-sized belts or harness.

One response to the problem of suitably ensuring that children can be safely and comfortably accommodated on an ordinary passenger vehicle seat has been proposed in the British Patent Specification GB—A—2 012 568.

However, children's seats as proposed in that specification have conjoined, substantially rigid base and back portions which are rigidly fixed one to the other in a suitable, L-shaped, in-use configuration. Hence, such seats are relatively bulky, and take up a considerable volume of space in a car or other vehicle in which they are used. This presents a substantial problem of where and how to store them when they are not in use and need to be put out of the way of adult passengers who need from time to time to be accommodated in the vehicle for particular journeys. For safety's sake, it is highly desirable that such a child's seat should never leave the car or other vehicle in which it is to be regularly used, in order that it is always available for use whenever it is required.

Patent specification BE—A—74689 discloses a child's seat assembly which is intended to be seated alternatively on a passenger seat of a motor vehicle, or in a free-standing manner on its own outside a motor vehicle. That child's seat assembly includes an extensible tubular seat frame on which a child's seat is permanently secured and supported. The seat comprises a seat portion secured to the upper part of the frame, and a backrest portion which is hinged directly to the seat portion and is controlled as to its inclination relative to the seat portion by adjustable telescopic side links. The child's seat portions may be made of a flexible material such as simulated leather, which may be provided if desired with reinforcement sheets. The seat assembly is secured on a passenger seat by engaging upturned parts of an lower member of the frame between the backrest and seat portions of the passenger seat. In order to convert the seat assembly so as to accommodate a child in a sleeping or reclining posture, the frame is telescopically extended so as to advance the seat forwardly away from the backrest of the passenger seat, and the side members are extended telescopically so as to cause the backrest portion of the child's seat to be moved rearwardly and downwardly from the upright position to the reclining position.

There is no proposal nor facility to use the child's seat on its own without the frame when installed in a motor vehicle, and it would not have been safe to do so, since the lack of rigidity in the seat portions and the lack of safety belts to positively locate the seat would have rendered the seat positionally unstable and dangerous when carried directly on a passenger seat in a vehicle. Moreover, there is no suggestion that the backrest portion may be hinged beyond the stated reclining position, nor any suggestion concerning storage of the seat assembly when not in use.

Patent specification US—A—3 366 294 discloses a carrier for carrying an infant alternatively on a passenger seat in a motor vehicle in conjunction with a simple lap seat belt, or outside such a vehicle, either in a person's arms or on a carriage.

That carrier is intended to be seated directly on a passenger seat in a vehicle, and comprises first and second portions of a flexible sheet material, which portions are hinged on one another so as in alternative configurations to accommodate an infant in the lying down position or an infant in an upright sitting position. The flexible sheet portions are provided with edge padding of a soft material, but no rigid members. The carrier is said to be 'substantially entirely of soft material and low in cost', and to be 'flexible to adapt itself to the gentle curvatures of the seat portion or the seat and back portions of an automobile seat'.

The relative positions of the two portions is determined by the adjustment of integral harness straps which interconnect the remove edges of the carrier portions. The two portions may be disposed in a substantially coplanar configuration so as to receive an infant in a lying down position, or substantially at right angles to one another so as to accommodate an infant in a sitting position. There is no disclosure that the carrier presents or could present a storage problem, and the construction described is clearly of insufficient strength to protect an infant, when in either posture, against injury by collision forces produced in an accident. There is no means of preventing the collapse of the upright portion towards and on to the horizontal portion under emergency braking or collision impact conditions, nor any means for preventing injury of a seated infant by the vehicle lap seat belt under such conditions.

The present invention seeks to overcome the shortcomings of those prior art devices, and to provide a seat of simple construction that combines low cost with high strength, and provides moreover a high degree of protection for a child occupant against injury under collision impact conditions.

Thus, according to the present invention, there is provided a child's seat which is arranged for use seated on an adult seat in a vehicle which is equipped with an adult-sized safety belt, and to rely solely on said safety belt to retain said child's seat in position on a said vehicle seat and to retain in position in said child's seat a child when seated therein, against disturbing forces.

With respect to GB—A—2012 568 which discloses

(a) a substantially rigid, horizontal seat portion on which a child may sit, said seat portion having an under serface for contacting said vehicle seat when said child's seat is seated thereon; and

(b) a substantially rigid, upright back portion against which such a child may rest its back when seated on the seat portion, said back portion having a rear surface for contacting said vehicle seat when said child's seat is seated thereon;

the child's seat according to the present invention is characterised in that:

(i) said seat and back portions are hingedly inter-connected by a transverse hinge means arranged to permit hinging of said back portion relative to said seat portion to and from an upright, in-use position, in which position said seat and back portions have, in side view, a substantially L-shaped configuration;

(ii) said hinge means is connected to said seat portion at a position whereon at or adjacent said under surface, and to said back portion at position thereon at or adjacent said rear surface;

(iii) said seat and back portions have respective transverse abutment surfaces which extend from said hinge means, and which, when said back portion is in said upright position, abut one another and so define said upright position; and

(iv) said hinge means is constructed and arranged to permit said back portion to hinge away from said upright position to a storage position in which said back portion lies in alignment with said seat portion.

Such a seat when in the flattened storage condition can be readily accommodated in a relatively small space, for example in the boot of a car, or a locker in an aircraft.

However, despite the freedom of the two portions to hinge relative to one another for storage purposes, the said abutment surfaces firmly determine the upright position of the back portion when the seat is placed on a vehicle seat, and prevent the collapse of the back portion forwardly over and towards the seat portion when the vehicle decelerates rapidly.

Preferably, said hinge means is constructed and arranged to permit said back portion to hinge away from said upright position through and beyond said storage position to another storage position in which said back portion lies with its said rear surface facing towards, and preferably adjacent, said under surface of said seat portion.

Said transverse abutment surfaces may be planar, curved or stepped surfaces.

Preferably, said back portion is provided at each of its respective sides with a respective forwardly-projecting child-supporting side wing, which wing has a profile as seen in sideways view which is curved in a manner such that when a shoulder portion of a said safety belt extends diagonally across said side wings so as (i) to position and retain said child's seat on a said vehicle seat, and (ii) too properly pass diagonally over the shoulder and chest of a child when seated therein, that shoulder belt portion is spaced from said back portion by a predetermined distance which is dependent upon the heights above said seat portion at which said shoulder belt portion contacts the respective side wings, which distance increases progressively as said heights increase and in a manner such as to accommodate children of different sizes without exerting undue belt pressure on the chest of a child when seated on said seat portion, whilst retaining belt contact with the chest of said seated child.

Such undue pressure might otherwise arise by virtue of the normal self-tightening properties of the seat belt, or by way of an impact delivered to the rear of the adult vehicle seat on which the child's seat is disposed, which impact is such as to cause the back portion of the adult seat to collapse forcibly forwards and so exert pressure upon the back portion of the child's seat.

Child's seats according to the present invention may be made by various methods. However, there are two generally preferred methods.

According to the first such preferred method, two firm mouldings of a foamed plastics material (e.g. expanded polystyrene) and constituting said seat and back portions are covered in a resilient foam plastics material where body-contact is to occur, and are hinged in the manner referred to above. A simple hinge of any suitably strong, flexible material can be used to achieve the interconnection and hinging of the two mouldings, although any convenient form of hinge can be used. The whole seat is then fitted with a tailored or close-fitting upholstery covering, which may be conveniently secured behind and underneath the seat by draw-strings, tapes or other means. Such covering may comprise a single one-piece cover, or two individual covers which fit the back and seat portions of the seat respectively.

According to the second preferred method, a hard, relatively thin shell of a rigid plastics, fibreglass or other structural material is made in two separate portions which are then hinged together, or alternatively two portions with an integral thin flexible hinge piece interconnecting them near the junction of the seat and base portions of the seat. The interior of the shell is padded with a resilient plastics foamed material wherever body-contact with the occupant of the seat is to occur, and the whole is then covered with fitted covers as mentioned above in respect of the first method. If the shell is made in two separate portions, any one of a variety of hinge mechanisms may be used to join them.

Though many forms of construction are possible within the scope of the present invention, one particular, preferred form of child's vehicle seat according to the present invention, for use particularly in a motor car, and using a construction according to method '1' referred to above, will now be described by way of example and with reference to the accompanying diagrammatic drawings, in which

Figure 1 shows a pictorial view of the seat when in its 'in-use' configuration;

Figures 2 and 3 show side and front views respectively of the seat shown in Figure 1, in the same 'in-use' configuration;

Figures 4 and 5 show side and front views respectively of the seat of Figures 1 to 3 when in one preferred storage configuration; and

Figure 6 shows a side view of the seat of Figures 1 to 5 when in a second preferred storage configuration.

Referring now to the drawings, the child's seat 10 there shown comprises, within an outer fabric covering, a seat or base portion 12 and a back or upright portion 14, which portions are interconnected by a transverse hinge 16, and comprise rigid mouldings of a light-weight plastics material, preferably high density polystyrene. Alternatively, those portions may be formed by cutting them from blocks of such material.

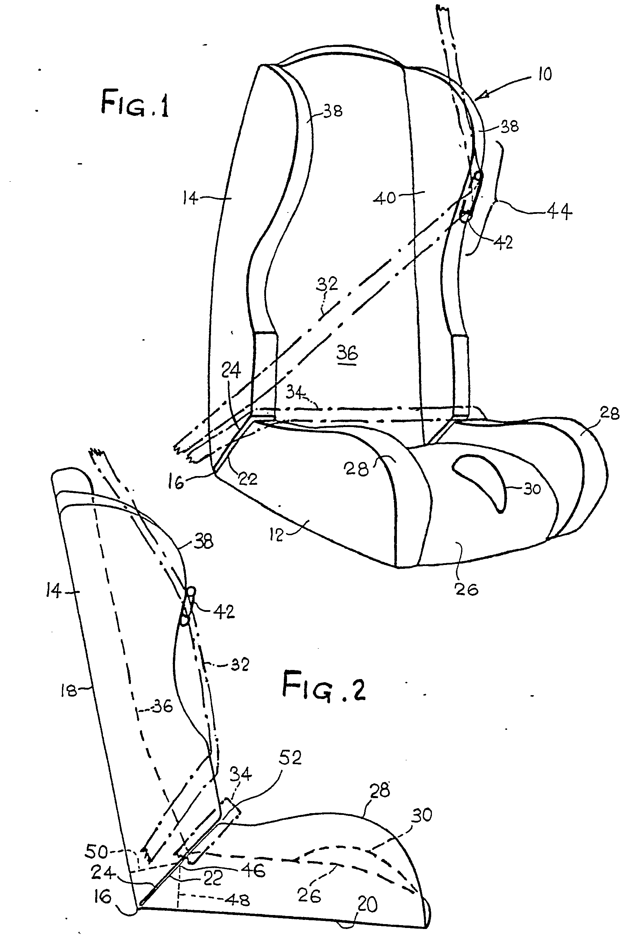

The two portions 12, 14 have the shapes and configurations indicated in the drawings. The hinge 16 is located at the junction of the planar rear surface 18 of the back portion 14 and the planar lower most surface 20 of the seat portion 12. Oblique planar joint surfaces 22, 24 extend from the hinge 16, and abut one another when the seat 10 is in the in-use configuration of the Figures 1 to 3. Those joint surfaces may alternatively be stepped or even curved, as seen in the side view of Figure 2.

The seat portion 12 comprises a central sitting part 26, and at the respective sides thereof two raised-arm rest parts 28 (which may be formed integrally with or glued to the sitting part 26). The sitting part is also provided with a forward, raised, tear-drop shaped part 30 (which likewise may be formed integrally with or glued to the sitting part), which part is intended to restrict voluntary forward movement of a child occupying the seat. Excessive voluntary forward movement is undesirable, since it could result in a mis-alignment of the diagonal and lap seat belt portions 32, 34 (indicated in the Figures in chain dotted form) which traverse the child's body.

The back portion 14 of the seat is gently curved in the body-contacting zone 36, and is provided at that zone with a layer or insert of a moulded soft foam plastics material which provides greater comfort and lumbar support for a child sitting in the seat.

The back portion is also provided at its respective sides with wings 38, which may be formed integrally with or glued to the adjoining central part of the back portion. Those wings are shaped so as to provide important safety features. The upper area 40 of each wing provides sideways support and restraint for the head of a child sitting in the seat, and so provides greater comfort for a child sitting asleep in the seat with the his head lolling to one side. Those wings also provide an energy absorbing zone for the child's head in the event of a sideways or angled impact on the vehicle in which the seat is carried.

Reference 42 indicates a simple, movable belt-guide in the form of a clip or strap (shown for simplicity's sake as a simple large-sized safety pin) which is intended to hold at any chosen position, and guide, the upper part of the diagonal portion 32 of a normal adult-sized safety belt associated with a normal passenger seat in a vehicle, the belt being free to move lengthwise through the guide 42.

That guide is attachable on or near the front edge of either side wing 38, and is movable at will up and down the zone generally indicated at reference 44, so as to suit the size of the particular child that is for the time being seated in the seat 10. The guide may be attached by any suitable method, including the use of an adjustable length loop, a series of spaced hooks, clips or loops, or pieces of a hooked pile fabric (such as that commercially available under the trade name 'VELCRO') attached to the fabric seat cover and guide 42 respectively.

The guide is intended to restrain and so prevent undesired upward movement of the upper diagonal belt portion 32, and position that belt portion so as to cross the chest of a child sitting in the seat at an optimum position for the child's safety regardless of the height of the upper attachment position of the seat belt on the vehicle, and the size of the child.

It is not the intention that the belt guide 42 should carry or sustain any significant loading that might develop under vehicle impact conditions, but rather that it shall ensure that the diagonal belt portion 32 is in the correct position on the occupant of the seat when any impact occurs. After the moment of any such impact, frictional effects maintain the position of the belt relative to the seat occupant during any deceleration.

The side profile of each such win 38 is curved in the manner shown in the drawings, so that by adjustment of the vertical position of the belt guide 42 on the wing adjacent the vertical attachment point of the seat belt on the vehicle, the position of the diagonal part 32 of the seat belt where it crosses the child sitting in the seat can be suited to the particular size of the child. The shaping of the wing profile in the said zone 44 allows for the variation, that occurs in children of different heights, in the back-to-front chest dimension with variation in the vertical position of the chest of a child when sitting in the seat 10, and thus enables the diagonal belt portion 32 to be aptly positioned so that it properly and snugly fits a seated child's chest without being overtight thereon.

In producing such a seat 10, ready for use, the hinged seat and back mouldings 12, 14 are padded appropriately with a moulded resilient material and are covered with and secured in a loose upholstery covering, as referred to above, and the belt guide 42 is attached to the appropriate wing 38 of the back portion 14.

In use, then it is desired to carry a small child in a vehicle (such as a car), the child's seat 10 is first placed on a normal passenger seat in the position to be occupied by the child passenger, and the child is then seated in the seat 10. The normal seat belt is then engaged about the child's seat and child, and the diagonal seat belt portion 32 is inserted in the guide 42. The child's seat is thereby held firmly in place against both the inadvertent movement during normal use, and violent abnormal movement which might occur should the vehicle suffer an impact.

It has been successfully shown that under impact conditions, the lap seat belt portion 34 (which normally lies approximately diagonally across the transverse junction of the two abutting joint surfaces 22, 24) will enter the junction space between the joint surfaces 22, 24 if the seat portion 12 moves forwards, as such forward movement tends to open up that junction space. The entry of that lap belt portion 34 into that junction space effectively restrains the seat portion 12 against any further forward movement on the vehicle seat, the restraining forces being transmitted from the lap belt portion 34 through the seat back portion 14 and the hinge 16 to the seat portion 12 itself.

The overall effect and benefit of the seat 10 described above is to restrain the seated child in a comfortable manner, to maintain it in the optimum position to receive maximum protection from the seat belt, and to prevent it from sliding downwardly and forwardly underneath the seat belt.

Since in the seat 10 described above the seat portion 12 is combined hingedly with the back portion 14, and side arm-rests 28 and head-supporting wings 38 are provided, good protection is given against injuries that might otherwise arise from whip-lash effects and from oblique or transverse side impacts.

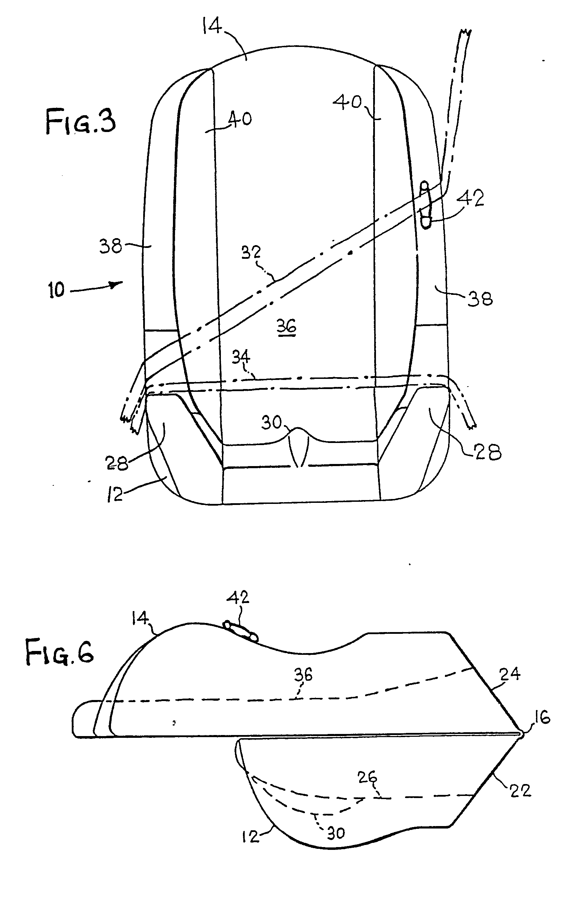

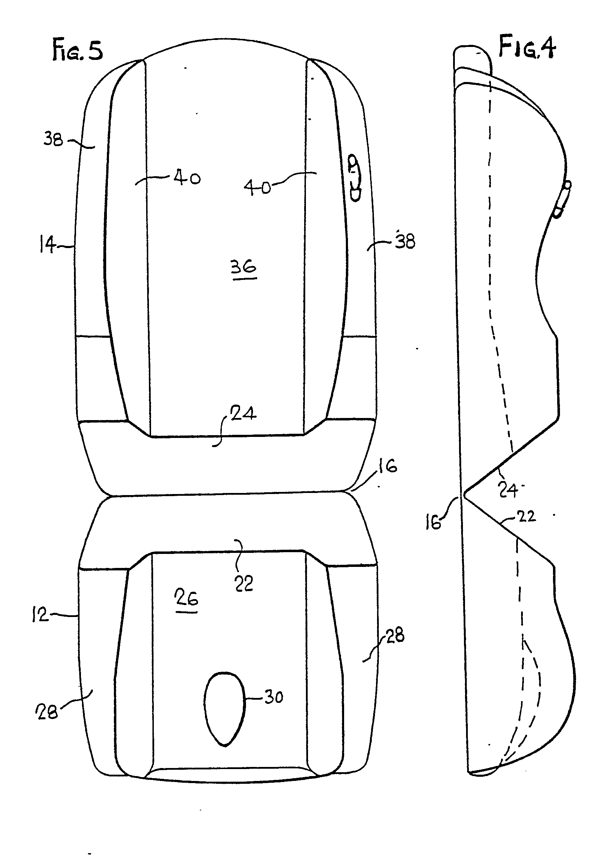

When the child's place in a vehicle is to be occupied instead by an adult, the child's seat 10 is removed from the vehicle seat, and the back portion 14 is hinged rearwardly away from the seat portion 12, until the two portions lie end-to-end and in line with one another, and to adopt the storage configuration shown in the Figures 4 and 5. In that configuration, the seat 10 may be conveniently stored away until next required in the boot (luggage compartment) of the car, where it will occupy only a conveniently shaped, small volume.

Alternatively, the back portion 14 may be hinged still further in the same direction until it lies with its rear surface 18 adjacent the lower most surface 20 of the seat portion, as shown in the Figure 6, for storage in the luggage compartment, where it will likewise occupy a small, though differently-shaped, space.

Clearly, the back portion 14 may be hinged so as to occupy any convenient storage position between that of the 'in-use' configuration Figures 1 to 3, and that of the storage configuration of Figure 6, for storage in any suitable available space in the luggage compartment.

The hinge 16 may advantageously comprise a pair of strips of a suitable, thin, hingeable, web material, which strips are secured together along a central longitudinal area, and of which strips one pair of longitudinal edge portions are secured adhesively to the adjoining surfaces 20, 22 respectively of the seat portion 12, and the other pair of longitudinal edge portions are secured adhesively to the adjoining surfaces 18, 24 respectively of the back portion 14.

If desired, in a modified form of the seat 10 the hinge 16 may be displaced from the position indicated at the junction of the surfaces 18 and 20, a short way up the joint surfaces 24, 22; for example, to the positions indicated in Figure 2 at reference 46, in which case the mouldings 12 and 14 are to be cut short as indicated by the dotted lines 48, 50 in Figure 2.

In a further modification of the seat 10, hinged side members are mounted on the respective sides of the seat and back portions 12, 14, and provide a hinge position situated remotely from the seat and back portions 12, 14.

## Claims

1. A child's seat (10) arranged for use seated on an adult seat in a vehicle which is equipped with an adult-sized safety belt (32, 34), and to rely solely on said safety belt (32, 34) to retain said child's seat (10) in a position on a said vehicle seat and to retain in position in said child's seat (10) a child when seated therein, against disturbing forces, which child's seat (10) comprises —

(a) a substantially rigid, horizontal seat portion (12) on which a child may sit, said seat portion (12) having an under surface (20) for contacting said vehicle seat when said child's seat (10) is seated thereon; and

(b) a substantially rigid, upright back portion (14) against which such a child may rest its back when seated on the seat portion (12), said back portion (14) having a rear surface (18) for contacting said vehicle seat when said child's seat (10) is seated thereon;

and which seat is characterised in that:

(i) said seat and back portions (12, 14) are hingedly inter-connected by a transverse hinge means arranged to permit hinging of said back portion (14) relative to said seat portion (12) to and from an upright, in-use position in which position said seat and back portions (12, 14) have, in side view, a substantially L-shaped configuration;

(ii) said hinge means (16) is connected to said seat portion (12) at a position thereon at or adjacent said under surface (20), and to said back portion (14) at a position thereon at or adjacent said rear surface (18);

(iii) said seat and back portions have respective transverse abutment surfaces (22, 24) which extend from said hinge means (16), and which, when said back portion (14) is in said upright position (Fig. 2), abut one another and so define said upright position; and

(iv) said hinge means (16) is constructed and arranged to permit said back portion (14) to hinge away from said upright position to a storage position in which said back portion (14) lies in alignment with said seat portion (12).

2. A child's seat according to claim 1, wherein said hinge means (16) is constructed and arranged to permit said back portion (14) to hinge away from said upright position through and beyond said storage position to another storage position in which said back portion (14) lies with its said rear surface (18) facing towards said under surface (20) of said seat portion (12).

3. A child's seat according to claim 2, wherein said hinge means (16) is constructed and arranged to permit said back portion (14) to hinge away from said upright position to a said another storage position in which said back portion (14) lies with its rear surface (18) adjacent said under surface (20) of said seat portion (12).

4. A child's seat according to any preceding claim, wherein said transverse abutment surfaces (20, 22) formed on said seat and back portions (12, 14) respectively are planar surfaces.

5. A child's seat according to any preceding claim, wherein said back portion (14) is provided at each of its respective sides with a respective forwardly-projecting child-supporting side wing (38), which wing (38) has a profile as seen in sideways view which is curved in a manner such that when a shoulder portion (32) of a said safety belt extends diagonally across said side wings (38) so as (i) to position and retain said child's seat (10) on a said vehicle seat, and (ii) to properly pass diagonally over the shoulder and chest of a child when seated therein, that shoulder belt portion (32) is spaced from said back portion (14) by a predetermined distance which is dependent upon the heights above said seat portion (12) at which said shoulder belt portion (32) contacts the respective side wings (38), which distance increases progressively as said heights increase and in a manner such as to accommodate children of different sizes without exerting undue belt pressure on the chest of a child when seated on said seat portion (12), whilst retaining belt contact with the chest of a sad seated child.

6. A child's seat according to claim 5, wherein there is provided on one side wing (38) a seat belt guide loop (42) which is adjustable in position on said side wing (38) so as to permit a said diagonal shoulder belt portion (32) when engaged therein to be positioned at a height above said seat portion (12) which is suited to the size of a child when seated on said seat portion (12).

7. A child's seat according to claim 5 or 6, wherein said seat portion (12) is also provided at its respective sides with respective child-supporting side wings (28).

8. A child's seat according to claim 5, 6 or 7, wherein each side wing (38, 28) is formed integrally with the associated seat or back portion (12, 14).

9. A child's seat according to claim 8, wherein each of said seat and back portions (12, 14) and its associated side wings (38, 28) comprise a moulding of a plastics material.

10. A child's seat according to claim 9, wherein said hinge means (16) is formed integrally with said seat and back portions (12, 14).

11. A child's seat according to any one of the claims 1 to 9, wherein said hinge means (16) comprises a thin web of a flexible material having its side margins secured to said seat and back portions (12, 14) respectively.

**Patentansprüche**

1. Kindersitz (10), der zur Benutzung auf einem Erwachsenensitz in einem Fahrzeug aufgesetzt wird, das mit einem Sicherheitsgurt (32, 34) in Erwachsenengröße ausgestattet ist, und der sich einzig auf den Sicherheitsgurt (32, 34) verläßt um den Kindersitz (10) auf dem Fahrzeugsitz festzuhalten und um in dem Kindersitz (10) ein auf eim sitzendes Kind festzuhalten, wenn störende Kräft auftreten, wobei der Kindersitz (10) umfaßt —

(a) ein im wesentlichen steifes, horizontales Sitzteil (12), auf dem ein Kind sitzen kann, wobei das Sitzteil (12) ein Unterseite (20) aufweist, um gegen de Fahrzeugsitz anzuliegen, wenn der Kindersitz (10) auf diesem aufgesetzt ist; und

(b) ein eim wesentlichen steifes, aufrechtes Rückteil (14), gegen das ein Kind seinen Rücken lehnen kann, wenn es auf dem Sitzteil (12) sitzt, wobei das Rückteil (14) ein Rückseite (18) aufweist, um gegen den Fahrzeugsitzt anzuliegen, wenn der Kindersitz (10) auf diesem aufgesetzt ist;

und wobei der Sitz dadurch gekennzeichnet ist:

(i) daß die Sitz- und Rückteile (12, 14) durch eine quer verlaufende Schariervorrichtung (16) schwenkbar miteinander verbunden sind, um eine Verschwenkung des Rückteiles (14) bezüglich des Sitzteiles (12) zu und von einer aufrechten Benutzungslage zu erlauben, bei welcher die Sitz- und Rückteile (12, 14) in einer Seitenansicht eine im wesentliche L-Form aufweisen;

(ii) daß die Scharniervorrichtung (16) mit dem Sitzteil (12) an einer Stelle auf der oder angrenzend und die Unterseite (20) und mit dem Rückteil (14) auf der oder angrenzend an die Rückseite (18) verbunden ist;

(iii) daß die Sitz- und Rückteile (12, 14) jeweilig quer verlaufende Anschlagflächen (22, 24) aufweisen, die sich ausgehend von der Schnarniervorrichtung (16) erstreckert, und die, wenn sich das Rückteil (14) in der aufrechten Lage (Fig 2) befindet, gegenseitig aneinanderstoßen und so die aufrechte Lage definieren; und

(iv) daß die Scharniervorrichtung (16) gestaltet und angeordnet ist, um es dem Rückteil (14) zu gestatten, von der aufrechten Lage in eine Aufbewahrungslage zu schwenken, bei der das Rückteil (14) mit dem Sitzteil (12) fluchtend liegt.

2. Kindersitz nach Anspruch 1, bei dem die Scharniervorrichtung (16) gestaltet und angeordnet ist, um es dem Rückteil (14) zu gestatten, von der aufrechten Lage durch und über die besagte Aufbewahrungslage in eine andere Aufbewahrungslage zu schwenken, bei der das Rückteile (14) mit seiner Rückseite (18) der Unterseite (20) des Sitzteiles (12) gegenüberliegt.

3. Kindersitz nach Anspruch 2, bei dem die Scharniervorrichtung (16) gestaltet und angeordnet ist, um es dem Rückteil (14) zu gestatten, von der aufrechten Lage in die andere Aufbewahrungslage zu schwenken, bei der das Rückteil (14) mit seiner Rückseite (18) an die Unterseite (20) des Sitzteiles (12) angrenzt.

4. Kindersitz nach einem der vorstehenden Ansprüche, bei dem die quer verlaufenden Anschlagflächen (22, 24), die jeweilig auf den Sitz- und Rückteilen (12, 14) gebildet sind, ebene Oberflächen sind.

5. Kindersitz nach einem der vorstehenden Ansprüche, bei dem das Rückteil (14) an jeder seiner jeweiligen Seiten mit einem jeweilig in Vorwärtsrichtung vorstehenden kindsunterstützenden Seitenflügel (38) ausgestattet ist, wobei der Flügel (38) in einer Seitenansicht ein Profil aufweist, welches in einer solchen Weise gekrümmt ist, daß wenn ein Schulterteil (32) des Sicherheitsgurtes sich diagonal über die Seitenflügel (38) erstreckt, es (i). den Kindersitz (10) auf dem Fahrzeugsitz positioniert und festhält, und es (ii). korrekt diagonal verlaufen über der Schulter und Brust eines in dem Kindersitz sitzenden Kindes liegt, wobei das Schultergurtteil (32) von dem Rückteil (14) durch einen vorbestimmten Abstand entfernt ist, der von der Höhe oberhalb des Sitzteiles (12) abhängt, bei der das Schultergurtteil (32) an den jeweiligen Seitenflügeln (38) anliegt, wobei dieser Abstand fortscheitend mit deiser Höhe und in solche einer Weise zunimmt, daß er für Kinder von verschiedenen Größen angepaßt ist, ohne daß unangemessener Gurtdruck auf die Brust eines Kindes ausgeübt wird, wenn es auf dem Sitzteil (12) sitzt, während Gurtkontakt mit der Brust des sitzenden Kindes aufrechterhalten wird.

6. Kindersitz nach Anspruch 5, bei dem auf dem besagten Seitenflügel (38) eine Sicherheitsgurtführungsschlaufe (42) vorgesehen ist, welche in ihrer Lage auf dem besagten Seitenflügel (38) einstellbar ist, um dem in sie eingreifenden, diagonal verlaufenden Schultergurtteil (32) zu erlauben, in eine Höhe über dem Sitzteil (12) angeordnet zu werden, die der Größe eines Kindes angepaßt ist, wenn es auf dem Sitzteil (12) sitzt.

7. Kindersitz nach Anspruch 5 oder Anspruch 6, bei dem für das Sitzteil (12) an seinen jeweiligen Seiten jeweilige kindsunterstützende Seitenflügel (28) vorgesehen sind.

8. Kindersitz nach Anspruch 5, 6 oder 7, bei dem jeder der Seitenflügel (38, 28) einstückig mit dem zugeordneten Sitz- oder Rückteil (12, 14) gestaltet ist.

9. Kindersitz nach Anspruch 8, bei der dem jeder der Sitz- oder Rückteile (12, 14) und ihre zugeordneten Seitenflügel (38, 28) ein Formteil aus einem Kunststoffmaterial umfassen.

10. Kindersitz nach Anspruch 9, bei dem die Scharniervorrichtung (16) einstückig mit den Sitz- oder Rückteilen (12, 14) gestaltet ist.

11. Kindersitz nach einem der Ansprüche 1 bis 9, bei dem die Scharniervorrichtung (16) ein dünnes Netz aus einem biegsamen Material umfaßt, dessen Seitenränder mit den jeweiligen Sitz- und Rückteilen (12, 14) befestigt sind.

**Revendications**

1. Siège (10) pour enfant agencé pour être utilisé posé sur le siège d'un adulte dans un véhicule qui est équipé d'une ceinture de sécurité (32, 34) pour adulte, et pour se fier seulement à l'action de cette ceinture de sécurité (32, 34) pour retenir le siège (10) pour enfant à sa position sur le siège du véhicule et pour retenir à sa position dans ce siège (10) pour enfant un enfant qui y est assis, contre toutes forces dérangeantes, ce siège (10) pour enfant comprenant

(a) une assise (12) horizontale substantiellement rigide sur laquelle un enfant peut s'asseoir, cette assise (12) ayant une face inférieure (20) pour venir en contact avec le siège du véhicule quand ce siège (10) pour enfant y est posé, et

(b) un dossier (14) dressé substantiellement rigide contre lequel ledit enfant peut appuyer son dos quand il est assis sur l'assise (12), ce dossier (14) ayant une face arrière (18) pour venir en contact avec le siège du véhicule quand ce siège (10) pour enfant y est posé, ce siège pour enfant étant caractérisé en ce que:

(i) cette assise et ce dossier (12, 14) sont articulés l'un avec l'autre par une charnière transversale (16) disposée pour permettre le pivotement de ce dossier (14) par rapport à cette assise (12) jusqu'à une position dressée pendant l'utilisation, et à partir de cette position, à laquelle cette assise et ce dossier (12, 14) ont, en vue de côté, une configuration substantiellement en L,

(ii) cette charnière (16) est réunie à cette assise (12) à un endroit de la surface inférieure (20) ou proche de celle-ci et à ce dossier (14) à un endroit de la surface arrière (18) ou proche de celle-ci,

(iii) cette assise et ce dossier (12, 14) ont des surfaces de butée transversales respectives (22, 24) qui s'étendent à partir de ladite charnière (16) et qui, quand le dossier (14) est à ladite position dressée (figure 2), butent l'une contre l'autre et définissent ainsi ladite position dressée, et

(iv) cette charnière (16) est conçue et agencée pour permettre au dossier (14) de pivoter en s'éloignant de ladite position dressée jusqu'à une position de rangement à laquelle le dossier (14) se trouve en alignement avec l'assise (12).

2. Siège pour enfant selon la revendication 1 dans lequel la charnière (16) est conçue et agencée pour permettre au dossier (14) de pivoter en s'éloignant de ladite position dressée jusqu'à ladite position de rangement et au-delà de celle-ci jusqu'à une autre position de rangement à laquelle le dossier (14) a sa face arrière (18) qui est tournée vers la face inférieure (20) de l'assise (12).

3. Siège pour enfant selon la revendication 2, dans lequel la charnière (16) est conçue et agencée pour permettre au dossier (14) de pivoter en s'éloignant de la position dressée jusqu'à l'autre position de rangement à laquelle ce dossier (14) a sa face arrière (18) au voisinage de la face inférieure (20) de l'assise (12).

4. Siège pour enfant selon l'une quelconque des revendications précédentes dans lequel les surfaces de butées transversales (20, 22) prévues sur l'assise et sur le siège (12, 14) sont respectivement des surfaces planes.

5. Siège pour enfant selon l'une quelconque des revendications précédentes dans lequel le dossier (14) est pourvu sur chacun de ses côtés respectifs d'une aile latérale s'étendant vers l'avant soutenant l'enfant, cette aile (38) ayant un profil dans une vue de côté qui est incurvé d'une manière telle que quand une partie d'épaule (32) d'une ceinture de sécurité s'étend diagonalement en travers de ces ailes latérales (38) de façon à (i) positionner et retenir le siège (10) pour enfant sur un siège de véhicule et (ii) passer convenablement en diagonale sur l'épaule et la poitrine d'un enfant quand il y est assis, cette partie d'épaule (32) de la ceinture est espacée du dossier (14) d'une distance prédéterminée qui dépend de la hauteur au-dessus de l'assise (12) à laquelle cette partie d'épaule (32) de la ceinture vient en contact avec les ailes latérales respectives (38), distance qui s'accroît progressivement à mesure que cette hauteur augmente et d'une manière à s'accommoder à des enfants de tailles différentes sans exercer de pression indûe de cette ceinture sur la poitrine de l'enfant quand celui-ci est assis sur l'assise (12), tout en conservant le contact de la ceinture avec la poitrine de l'enfant assis.

6. Siège pour enfant selon la revendication 5 dans lequel il existe sur une aile latérale (38) une boucle (42) de guidage de la ceinture qui est réglable en position sur ladite aile latérale (38) de manière à permettre à la partie d'épaule (32) en diagonale de la ceinture quand elle est engagée avec elle d'être disposée à une hauteur au-dessus de l'assise (12) qui est appropriée à la taille d'un enfant quand celui-ci est assis sur cette assise (12).

7. Siège pour enfant selon la revendication 5 ou 6 dans lequel cette assise (12) est pourvue aussi sur ses côtés respectifs d'ailes latérales (28) correspondantes pour soutenir un enfant.

8. Siège pour enfant selon la revendication 5, 6 ou 7 dans lequel chaque aile latérale (38, 28) fait partie intégrante de l'assise ou du dossier (12, 14) correspondant.

9. Siège pour enfant selon la revendication 8 dans lequel chacun de l'assise et du dossier (12, 14) et des ailes latérales (38, 28) qui lui sont associées est constitué par un moulage d'une matière plastique.

10. Siège pour enfant selon la revendication 9 dans lequel la charnière (16) fait partie intégrante de l'assise et du dossier (12, 14).

11. Siège pour enfant selon l'une quelconque des revendications 1 à 9 dans lequel la charnière (16) comprend un tissu mince d'une matière souple ayant ses marges latérales fixées respectivement à l'assise et au dossier (12, 14).

FIG.1

FIG.2

FIG.3

FIG.6

FIG. 5

FIG. 4